# EUROPÄISCHE PATENTANMELDUNG

(11) **EP 2 671 728 A1**
(43) Veröffentlichungstag der Anmeldung: **11.12.2013**
(21) Anmeldenummer: 13002913.5
(22) Anmeldetag: 06.06.2013
(51) Int. Cl.: B60C 7/10, B60C 7/00

(54) **Reifen für einen Kinderwagen**

(30) Priorität: 07.06.2012 DE 102012011312
(71) Anmelder: Emmaljunga Barnvagnsfabrik AB, 28022 Vittsjö (SE)
(72) Erfinder: Persson, Christian, S - 280 22 Vittsjö (SE)
(74) Vertreter: Bauer, Clemens

(57) **Zusammenfassung**

Reifen (1), insbesondere für einen Kinderwagen oder ähnliches, mit einer nach außen gerichteten Lauffläche und einer zur Rotationsachse (x) des Reifens gerichteten inneren Mantelfläche, umfassend einen ersten Abschnitt, welcher zumindest die innere Mantelfläche bildet und aus einem ersten Material ausgebildet ist, und einen zweiten Abschnitt, welcher zumindest einen Teil der Lauffläche bildet und aus einem zweiten Material ausgebildet ist, wobei das erste Material weicher als das zweite Material ausgebildet ist.

## Beschreibung

Die vorliegende Erfindung betrifft einen Reifen, insbesondere einen Kinderwagenreifen, mit einer nach außen gerichteten Lauffläche und einer zur Rotationsachse des Reifens gerichtete innere Mantelfläche.

Kinderwagenreifen der in Rede stehenden Art sind hinlänglich aus dem Stand der Technik bekannt. So existieren beispielsweise luftgefüllte Reifen, bei welchen ein mit Luft gefüllter Schlauch in einem Reifenmantel angeordnet ist. Problematisch bei derartigen Reifen ist jedoch, dass diese sehr empfindlich gegen auf dem Untergrund befindliche spitze Gegenstände sind und leicht zerstört werden können. Um dieses Problem zu beheben, existieren weiterhin Reifen aus Polyurethan. Hierbei ist der Reifen aus einem Polyurethanvollkörper ausgebildet und somit aufgrund der Härte des Polyurethans äußerst widerstandsfähig gegen spitze, auf dem Untergrund liegende Gegenstände. Problematisch bei derartigen Reifen ist jedoch, dass diese aufgrund der Härte des Materials einen sehr geringen Komfort aufweisen.

Es ist somit Aufgabe der vorliegenden Erfindung, einen Reifen, insbesondere einen Kinderwagenreifen, vorzusehen, der robust aufgebaut ist, das heißt widerstandsfähig gegen auf dem Untergrund liegende spitze Gegenstände ist, und gleichzeitig einen hohen Komfort ermöglicht.

Diese Aufgabe wird durch einen Reifen, insbesondere einen Kinderwagenreifen, mit den Merkmalen des Anspruchs 1, gelöst. Bevorzugte Ausführungsformen ergeben sich aus den abhängigen Ansprüchen.

Erfindungsgemäß ist ein Reifen, insbesondere für Kinderwägen oder ähnliches, vorgesehen, mit einer nach außen gerichteten Lauffläche und einer zur Rotationsachse des Reifens gerichteten inneren Mantelfläche, umfassend einen ersten Abschnitt bzw. Teil, welcher zumindest die innere Mantelfläche bildet und aus einem ersten Material ausgebildet ist, und einen zweiten Abschnitt bzw. Teil, welcher zumindest einen Teil der Lauffläche bildet und aus einem zweiten Material ausgebildet ist, wobei das erste Material weicher als das zweite Material ausgebildet ist. Der Reifen eignet sich somit insbesondere als Kinderwagenreifen. Dieser ist insbesondere dadurch gekennzeichnet, dass der Außendurchmesser des Reifens im Bereich zwischen 10 cm bis 40 cm, vorzugsweise 15 cm bis 35 cm und besonders bevorzugterweise zwischen 25 cm bis 30 cm, groß ist. Die Breite eines solchen Reifens variiert zwischen 25 mm bis 90 mm, vorzugsweise 35 mm bis 75 mm und besonders bevorzugterweise zwischen 50 mm und 70 mm. Der Reifen ist - wie ein bekannter Reifen - ringförmig ausgebildet und weist eine nach außen gerichtete Lauffläche auf, welche vorgesehen ist, damit der Reifen auf einem Untergrund abrollen kann. Hierfür weist die Lauffläche zweckmäßigerweise eine konvexe Krümmung auf, so dass bei bestimmungsgemäßem Gebrauch nur ein Teil der Lauffläche mit dem Untergrund kontaktiert. In anderen Worten wird die Lauffläche durch die äußere Mantelfläche definiert, wobei ein Teilbereich hiervon mit dem Untergrund bei bestimmungsgemäßem Gebrauch kontaktiert. Der Lauffläche im Wesentlichen gegenüberliegend angeordnet bzw. zur Rotationsachse des Reifens hin gerichtet ist eine innere Fläche bzw. Mantelfläche. Die innere Mantelfläche dient insbesondere der Anbindung an eine Radfelge oder -nabe. Der Reifen ist aus zwei verschiedenen Materialien ausgebildet. Hierbei weist der Reifen einen ersten Abschnitt bzw. Teil bzw. Bereich auf, der zumindest die innere Mantelfläche bildet und aus einem ersten Material ausgebildet ist. In anderen Worten wird zumindest der Bereich des Reifens, welcher mit der Radfelge in Eingriff gebracht wird, durch ein erstes Material ausgebildet. Der Reifen weist weiterhin einen zweiten Abschnitt bzw. Teil bzw. Bereich auf, der zumindest einen Teil der Lauffläche bildet und aus einem zweiten Material ausgebildet ist. In anderen Worten wird die Lauffläche zumindest bereichsweise aus einem zweiten, von dem ersten Material unterschiedlichen Material ausgebildet. Vorteilhafterweise ist das erste Material weicher ausgebildet als das zweite Material. Hierdurch wird gewährleistet, dass durch das härter ausgebildete zweite Material die Lauffläche widerstandsfähig gegen spitze Gegenstände auf dem Untergrund ist, wobei der Reifen aufgrund der weicheren Gestaltung des ersten Materials nach wie vor gute elastische Eigenschaften aufweist und somit komfortabel ausgelegt ist. Das erste Material ist somit zweckmäßigerweise elastischer ausgebildet als das zweite Material. Insbesondere kann das zweite Material im wesentlichen inkompressibel ausgebildet sein, wohingegen das erste Material kompressibel sein kann. In anderen Worten ist das erste Material vorzugsweise als Weichkomponente und das zweite Material vorzugsweise als Hartkomponente ausgebildet. Zweckmäßigerweise sind das erste und zweite Material derart ausgebildet, dass sich diese bei bestimmungsgemäßem Gebrauch nicht oder nur unwesentlich plastisch verformen. Bei dem erfindungsgemäßen Reifen ist zweckmäßigerweise der Reifenquerschnitt, das heißt die Anordnung und das Verhältnis von erstem Abschnitt zu zweitem Abschnitt in Umfangsrichtung des Reifens, konstant bzw. gleichbleibend ausgebildet ist.

Vorteilhafterweise liegt das Verhältnis des Volumens des zweiten Teils bzw. Abschnitts zu dem Volumen des ersten Teils bzw. Abschnitts im Bereich von 0,01 bis 0,1, vorzugsweise 0,02 bis 0,08 und besonders vorzugsweise 0,04 bis 0,06. Der Reifen wird somit hinsichtlich seines wesentlichen Volumens durch das erste Material ausgebildet, welches weicher bzw. elastischer als das zweite Material ausgebildet ist, so dass der Reifen die notwendigen elastischen Eigenschaften aufweist.

Vorteilhafterweise erstreckt sich der zweite Abschnitt über zumindest 20%, vorzugsweise 40% - 70% und besonders vorzugsweise 50% - 60% der nach außen gerichteten Lauffläche. Insofern kann der erste Abschnitt gleichfalls einen Teil der Lauffläche ausbilden. Im Querschnitt gesehen ist es jedoch bevorzugt, dass der zweite Abschnitt eine äußere, in Reifen-Breiten-Richtung gesehen mittig angeordnete Position aufweist, wohingegen der erste Abschnitt - in Reifen-Breiten-Richtung gesehen - in den äußeren bzw. Randbereichen der Lauffläche vorgesehen bzw. angeordnet ist. Durch eine Anordnung des zweiten Abschnitts über zumindest 20% der Lauffläche, vorzugsweise 40% - 70% und besonders vorzugsweise 50% - 60%, wird gewährleistet, dass das den Reifen vor spitzen Gegenständen schützende zweite Material nicht nur bei einer vertikalen bzw. senkrechten Anordnung des Reifens auf dem Untergrund, sondern auch bei einer hierzu geneigten Anordnung (z. B. bei Kurvenfahrten) wirksam ist.

Um eine Benutzung des Reifens auch bei seiner geneigten Lage relativ zum Untergrund zu ermöglichen, ist die Lauffläche vorteilhafterweise konvex ausgebildet. Das heißt im Querschnitt gesehen (wobei die Rotationsachse des Reifens in der Querschnittsebene liegt) ist die Lauffläche nach außen - das heißt von der Rotationsachse weg - gewölbt und somit konvex ausgebildet. Der Krümmungsradius der Lauffläche liegt hierbei zweckmäßigerweise in einem Bereich von 30 mm - 80 mm, vorzugsweise 35 mm - 60 mm und besonders vorzugsweise 40 mm - 50 mm.

Zweckmäßigerweise liegt das Verhältnis der maximalen radialen Erstreckung des zweiten Abschnitts zur maximalen radialen Erstreckung des ersten Abschnitts zwischen 0,02 - 0,3, vorzugsweise zwischen 0,06 - 0,2 und besonders vorzugsweise 0,08 - 0,1. Im Querschnitt gesehen ist der erste Abschnitt somit als voll-volumiger Körper ausgebildet, wohingegen der zweite Abschnitt lediglich eine vergleichsweise dünne Schicht ausbildet.

Zweckmäßigerweise weist der erste Abschnitt an der der Rotationsachse des Reifens abgewandten Seite einen vorzugsweise umlaufenden Rücksprung auf, in dem der zweite Abschnitt aufgenommen ist. In anderen Worten weist der erste Abschnitt an seiner der Lauffläche zugewandten Seite eine umlaufende Nut auf, in welcher der zweite Abschnitt bzw. das zweite Material aufgenommen ist. Die Umfangsfläche der Nut bzw. des Rücksprungs kann beliebig ausgestaltet sein. So kann die Umfangsfläche beispielsweise ebenfalls eine vorzugsweise konvexe Krümmung aufweisen. Vorteilhafterweise jedoch ist die Umfangsfläche des Rücksprungs plan- bzw. eben- bzw. im Querschnitt gesehen nicht gekrümmt, sondern gerade ausgebildet. Hierdurch wird eine zuverlässigere Fixierung des ersten Abschnitts am zweiten Abschnitt ermöglicht.

Zweckmäßigerweise weist der zweite Abschnitt Stirnflächen auf, deren Erstreckung in Radialrichtung im Wesentlichen der Erstreckung des Rücksprungs in Radialrichtung entspricht. In anderen Worten weist der zweite Abschnitt somit axial ausgerichtete Stirnflächen auf, die im Wesentlichen kongruent zu den im Wesentlichen axial gerichteten Stirnflächen des Rücksprungs ausgebildet sind. Somit wird gewährleistet, dass die Lauffläche des Reifens im Übergangsbereich zwischen erstem Abschnitt und zweitem Abschnitt ohne Stufe bzw. stufenlos ausgebildet ist.

Vorteilhafterweise erweitert sich der Rücksprung radial nach außen hin. In anderen Worten ist der Querschnitt des Rücksprungs derart ausgebildet, dass dessen Seitenflächen sich zur Außenseite des Reifens hin erweitern.

Dementsprechend kann der zweite Abschnitt des Reifens - im Querschnitt gesehen - sich ebenfalls radial nach außen hin erweitern.

In einer alternativen Ausführungsform kann der Rücksprung als Hinterschneidung ausgebildet sein. In anderen Worten verjüngt sich der Rücksprung radial nach außen hin. Hierdurch wird eine besonders sichere Festlegung des zweiten Abschnitts im Rücksprung ermöglicht.

Vorteilhafterweise weist der erste Abschnitt eine "Shore A"-Härte zwischen 35 - 55, vorzugsweise zwischen 40 - 50 und besonders vorzugsweise zwischen 42 - 48 auf. Ein derartiges Material weist eine besonders gute dämpfende Eigenschaft auf.

Der zweite Abschnitt kann zweckmäßigerweise eine "Shore A"-Härte zwischen 45 - 85, vorzugsweise zwischen 58 - 75 und besonders vorzugsweise zwischen 65 - 70 aufweisen. Hierdurch wird ein Material bereitgestellt, welches besonders stabil gegen die Einwirkung von spitzen Gegenständen ausgebildet ist.

Insbesondere sind die vorstehend genannten Bereiche so gewählt, dass die "ShoreA"-Härte des zweiten Abschnitts immer grösser als die des ersten Abschnitts ist.

Bevorzugterweise ist der erste Abschnitt aus einem vorzugsweise geschlossenzelligen geschäumten Material, beispielsweise EVA (Ethyl Vinyl Acetat) ausgebildet. Dies führt zu besonders guten elastischen Eigenschaften.

Zweckmäßigerweise ist der zweite Abschnitt aus einem vorzugsweise elastischen und vorzugsweise nicht plastisch verformbaren Kunststoff ausgebildet. Dies kann insbesondere ein thermoplastisches Polyurethan, ein thermoplastisches Polyethylen oder ein anderes Polyurethan sein. Solch ein Material ist besonders widerstandsfähig gegen plastische und elastische Verformung.

Zweckmäßigerweise sind der erste und zweite Abschnitt kraftschlüssig und besonders vorzugsweise formschlüssig miteinander verbunden. Besonders vorteilhafterweise sind der erste und zweite Abschnitt jedoch stoffschlüssig verbunden. Die stoffschlüssige Verbindung kann beispielsweise durch eine Klebe- oder Schweißverbindung zwischen dem ersten und zweiten Abschnitt erfolgen..

Weiterhin erfindungsgemäß kann ein Rad, insbesondere Kinderwagenrad, vorgesehen sein, umfassend einen erfindungsgemäßen, oben beschriebenen, Reifen, an dessen innerer Mantelfläche eine Radfelge angeordnet ist.

Es versteht sich, dass die Vorteile und Merkmale des erfindungsgemäßen Reifens ebenfalls in dem erfindungsgemäßen Rad Anwendung finden können.

Weitere Vorteile und Merkmale der Erfindung ergeben sich aus der nachfolgenden Beschreibung von bevorzugten Ausführungsformen mit Bezug auf die beigefügten Figuren, wobei einzelne Merkmale einzelner Ausführungsformen zu neuen Ausführungsformen miteinander kombiniert werden können. Es zeigen:
- Figur 1: eine perspektivische Ansicht einer ersten Ausführungsform des erfindungsgemäßen Rads.
- Figur 2: eine Querschnittsansicht einer ersten Ausführungsform des erfindungsgemäßen Rads.
- Figur 3: eine Querschnittsansicht einer zweiten Ausführungsform des erfindungsgemäßen Rads.

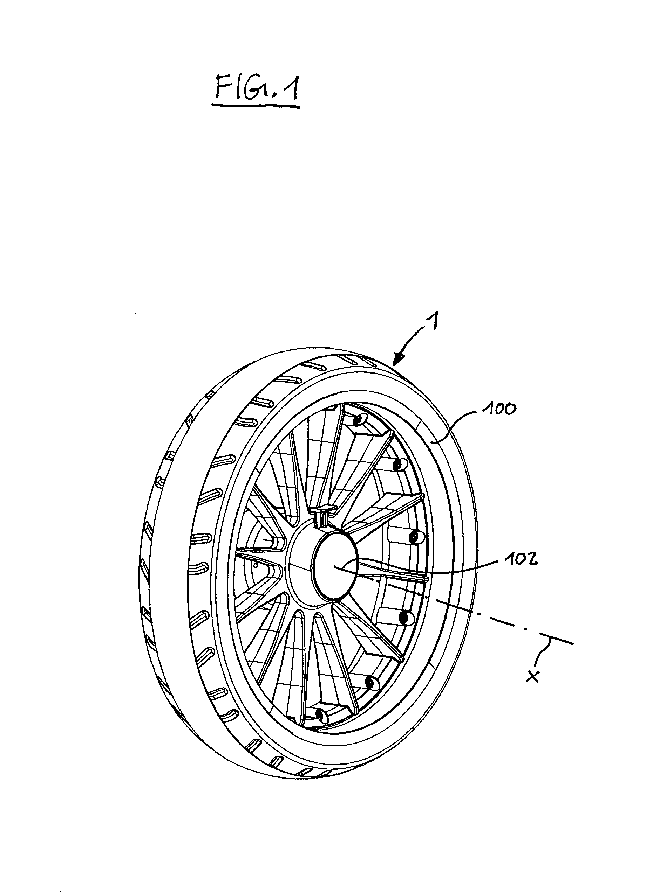

In **Fig. 1** ist eine beispielhafte, erste Ausführungsform eines erfindungsgemäßen Rads dargestellt. Das Rad weist einen Reifen 1 sowie eine Radfelge 100 auf. Die Radfelge 100 besitzt koaxial zur Rotationsachse x eine Radnabe 102, mittels welcher das Rad an einer Achse eines beispielsweise Kinderwagens drehbar montiert werden kann.

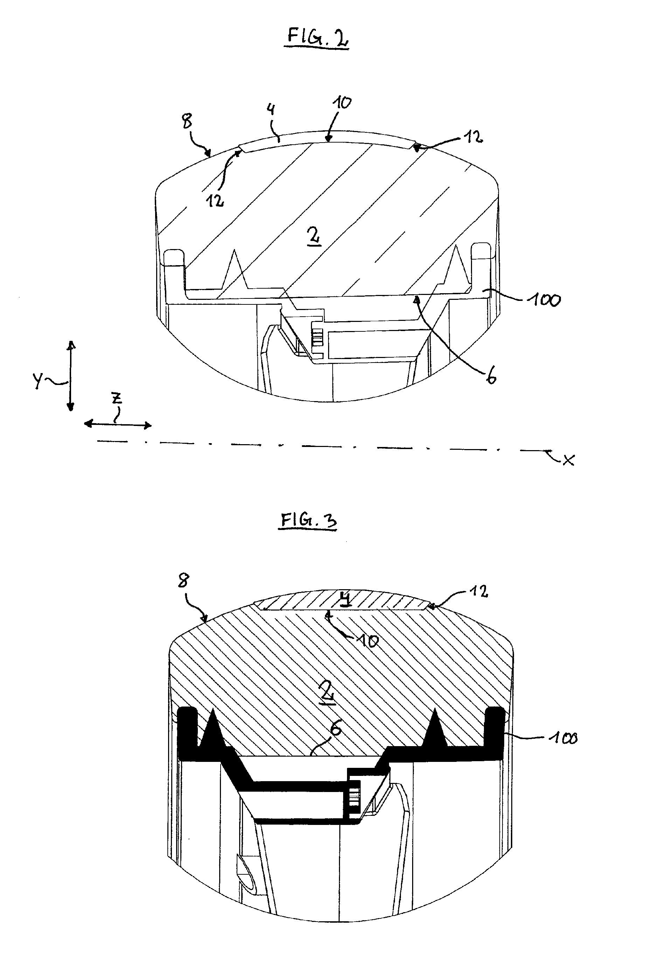

In **Fig. 2** ist eine Querschnittsansicht einer beispielhaften, bevorzugten Ausführungsform des Reifens 1 dargestellt. Der Reifen umfasst einen ersten Abschnitt 2 sowie einen zweiten Abschnitt 4. Zur Rotationsachse x des Reifens gerichtet ist eine innere Mantelfläche 6, welche insbesondere zur Festlegung auf der Radfelge 100 dient. Im Wesentlichen gegenüberliegend zur Mantelfläche 6 ist eine nach außen gerichtete Lauffläche 8, welche in der dargestellten Ausführungsform konvex, das heißt nach außen gewölbt, ausgebildet ist. Der Krümmungsradius der Lauffläche liegt zweckmäßigerweise zwischen 25 mm - 80 mm.

Wie ersichtlich wird ein Teil der Lauffläche 8 durch den zweiten Abschnitt 4 und ein weiterer Teil der Lauffläche 8 durch den ersten Abschnitt 2 ausgebildet. Hierbei ist der zweite Abschnitt 4 vorteilhafterweise derart angeordnet, dass er einen mittleren Bereich bzw. Abschnitt der umlaufenden Lauffläche 8 ausbildet, wohingegen der erste Abschnitt 2 seitlich daneben angeordnete äußere bzw. Randbereiche der Lauffläche 8 konstituiert. Es hat sich als besonders vorteilhaft erwiesen, wenn sich der zweite Abschnitt über zumindest 20%, vorzugsweise 40% - 70% und besonders vorteilhafterweise 50% - 60% der Lauffläche 8 erstreckt.

Es versteht sich, dass der Querschnittsverlauf des Reifens 1 in Umfangsrichtung im Wesentlichen konstant bzw. gleichbleibend ausgebildet ist. "Im Wesentlichen" ist hierbei dahingehend zu verstehen, dass eine eventuelle Profilierung der Lauffläche 8 unberücksichtigt bleibt.

Der erste Abschnitt 2 weist an seiner der Rotationsachse x abgewandten Seite, das heißt an der nach außen hin gerichteten Seite, einen radial umlaufenden Rücksprung 10 auf. In dem Rücksprung 10 ist der zweite Abschnitt 4 aufgenommen. In der dargestellten Ausführungsform erweitert sich der Rücksprung radial nach außen hin, das heißt die im Wesentlichen axial gerichteten Seiten- bzw. Stirnflächen 12 des Rücksprungs 10 bzw. des zweiten Abschnitts 4 erweitern sich in Radialrichtung y gesehen nach außen hin.

In der in Fig. 2 dargestellten Ausführungsform weist der Rücksprung 10 eine Bodenfläche bzw. umlaufende Fläche auf, die konvex, das heißt nach außen gewölbt, ausgebildet ist. Insoweit ist der Rücksprung 10 hierbei besonders vorteilhafterweise derart ausgebildet, dass die Tiefe des Rücksprungs 10 und somit die Dicke des zweiten Abschnitts 4 in Breitenrichtung z gesehen konstant bzw. gleich ist.

In der in **Fig. 3** dargestellten Ausführungsform ist hingegen der Rücksprung 10 derart ausgebildet, dass dessen Bodenfläche bzw. Umfangsfläche im Querschnitt gesehen gerade, das heißt nicht gewölbt, ausgebildet ist. Infolgedessen ist die Bodenfläche des Rücksprungs entsprechend einer Mantelfläche eines Zylinders ausgebildet. Eine derartige Konfiguration ermöglicht eine besonders sichere Befestigung des zweiten Abschnitts 4 an dem ersten Abschnitt 2.

Beiden in den Figuren dargestellten Ausführungsformen ist gemein, dass der erste Abschnitt 2 aus einem ersten Material ausgebildet ist, welches weicher bzw. elastischer als das zweite Material des zweiten Abschnitts 4 ausgebildet ist. Das erste Material des ersten Abschnitts 2 kann vorteilhafterweise aus einem geschlossenzelligen geschäumten Material, beispielsweise EVA (Ethyl Vinyl Acetat) ausgebildet sein, welches vorteilhafterweise eine "Shore A"-Härte zwischen 35 - 55, vorzugsweise zwischen 40 - 50 und besonders vorzugsweise zwischen 42 - 48 aufweist.

Das zweite Material des zweiten Abschnitts 4 kann aus einem vorzugsweise elastischen Kunststoff, wie beispielsweise Polyurethan oder thermoplastisches Thermourethan, ausgebildet sein und weist vorteilhafterweise eine "Shore A"-Härte zwischen 45 - 85, vorzugsweise zwischen 58 - 75 und besonders vorzugsweise zwischen 65 - 70 auf.

An den Kontaktstellen zwischen erstem Abschnitt 2 und zweitem Abschnitt 4 sind diese miteinander verbunden. Die Verbindung ist hierbei insbesondere kraftschlüssig und besonders vorzugsweise formschlüssig. Weiter vorteilhafterweise erfolgt die Verbindung stoffschlüssig. Hierbei kann der erste Abschnitt 2 mit dem zweiten Abschnitt 4 verklebt werden. Es ist jedoch auch möglich, diese mittels eines Zweikomponenten-Gießverfahrens derart miteinander zu verbinden, dass diese kraft- und formschlüssig miteinander in Eingriff stehen. Gleichfalls wäre eine stoffschlüssige Verbindung möglich.

### Bezugszeichenliste:

- 2: erster Abschnitt
- 4: zweiter Abschnitt
- 6: Mantelfläche
- 8: Lauffläche
- 10: Rücksprung
- 12: Seitenfläche
- 100: Radfelge
- 102: Radnabe
- x: Rotationsachse
- y: Radialrichtung
- z: Breitenrichtung

## Patentansprüche

1. Reifen (1), insbesondere für einen Kinderwagen oder ähnliches,
mit einer nach außen gerichteten Lauffläche (8) und einer zur Rotationsachse (x) des Reifens gerichteten inneren Mantelfläche (6),
umfassend einen ersten Abschnitt (2), welcher zumindest die innere Mantelfläche (6) bildet und aus einem ersten Material ausgebildet ist, und
einen zweiten Abschnitt (4), welcher zumindest einen Teil der Lauffläche (8) bildet und aus einem zweiten Material ausgebildet ist,
wobei das erste Material weicher als das zweite Material ausgebildet ist.

2. Reifen nach Anspruch 1, wobei das Verhältnis des Volumens des zweiten Abschnitts (4) zu dem Volumen des ersten Abschnitts (2) im Bereich von 0,01 bis 0,1, vorzugsweise 0,02 bis 0,08, und besonders vorzugsweise 0,04 bis 0,06 liegt.

3. Reifen nach einem der vorhergehenden Ansprüche, wobei sich der zweite Abschnitt (4) über zumindest 20%, vorzugsweise 40% bis 70% und besonders vorzugsweise 50% bis 60% der Lauffläche (8) erstreckt.

4. Reifen nach einem der vorhergehenden Ansprüche, wobei die Lauffläche (8) konvex ausgebildet ist, und wobei der Krümmungsradius der Lauffläche (8) vorzugsweise 30 mm - 80 mm, vorzugsweise 35 mm - 60 mm und besonders vorzugsweise 40 mm - 50 mm beträgt.

5. Reifen nach einem der vorhergehenden Ansprüche, wobei das Verhältnis der maximalen radialen Erstreckung des zweiten Abschnitts (4) zur maximalen radialen Erstreckung des ersten Abschnitts (2) zwischen 0,02 bis 0,3, vorzugsweise 0,06 bis 0,2 und besonders vorzugsweise 0,08 bis 0,1 liegt.

6. Reifen nach einem der vorhergehenden Ansprüche, wobei der erste Abschnitt (2) an der der Rotationsachse (x) des Reifens abgewandten Seite einen Rücksprung (10) aufweist, in dem der zweite Abschnitt (4) aufgenommen ist.

7. Reifen nach Anspruch 6, wobei der zweite Abschnitt Stirnflächen aufweist, deren Erstreckung in Radialrichtung im Wesentlichen der Erstreckung des Rücksprungs (10) in Radialrichtung entspricht.

8. Reifen nach Anspruch 6 oder 7, wobei sich der Rücksprung (10) radial nach außen hin und/oder der zweite Abschnitt (4) des Reifens sich radial nach außen hin erweitert.

9. Reifen nach einem der Ansprüche 6 - 8, wobei der Rücksprung (10) als Hinterschneidung ausgebildet ist oder sich radial nach außen erweitert.

10. Reifen nach einem der vorhergehenden Ansprüche, wobei der erste Abschnitt (2) eine "Shore A"-Härte zwischen 35 - 55, vorzugsweise zwischen 40 - 50 und besonders vorzugsweise zwischen 42 - 48 aufweist und/oder wobei der zweite Abschnitt (4) eine "Shore A"-Härte zwischen 45 - 85, vorzugsweise zwischen 58 - 75 und besonders vorzugsweise zwischen 65 - 70 aufweist.

11. Reifen nach einem der vorhergehenden Ansprüche, wobei der erste Abschnitt (2) aus einem vorzugsweise geschlossenzelligen geschäumten Material und/oder der zweite Abschnitt (4) aus einem vorzugsweise elastischen Kunststoff ausgebildet ist.

12. Reifen nach einem der vorhergehenden Ansprüche, wobei der erste Abschnitt (2) und der zweite Abschnitt (4) stoffschlüssig und/oder kraftschlüssig und vorzugsweise formschlüssig miteinander verbunden sind.

13. Rad, insbesondere für Kinderwägen oder ähnliches, umfassend einen Reifen nach einem der vorhergehenden Ansprüche sowie eine Radfelge (100), an welcher der Reifen (1) festgelegt ist.
